# EUROPÄISCHE PATENTSCHRIFT

(11) **EP 3 498 449 B1**
(45) Veröffentlichungstag und Bekanntmachung des Hinweises auf die Patenterteilung: **08.12.2021**
(21) Anmeldenummer: 18201882.0
(22) Anmeldetag: 23.10.2018
(51) Int. Cl.: B29C 48/09, B29C 48/00, B29C 48/151, B29C 48/21, B29C 48/285, B29C 48/32

(54) **VERFAHREN ZUR HERSTELLUNG EINES KLIMASCHLAUCHES SOWIE VORRICHTUNG ZUR DURCHFÜHRUNG DES VERFAHRENS**
METHOD FOR MANUFACTURING AN AIR CONDITIONING HOSE AND DEVICE FOR PERFORMING THE METHOD
PROCÉDÉ DE FABRICATION D'UN TUYAU DE CLIMATISATION AINSI QUE DISPOSITIF DESTINÉ À LA MISE EN UVRE DUDIT PROCÉDÉ

(30) Priorität: 14.12.2017 DE 102017222803; 17.10.2018 DE 102018217714
(43) Veröffentlichungstag der Anmeldung: 19.06.2019
(73) Patentinhaber: ContiTech Techno-Chemie GmbH, 61184 Karben (DE)
(72) Erfinder: Messerschmidt, Jonathan, 71540 Murrhardt (DE)
(74) Vertreter: Continental Corporation

(56) Entgegenhaltungen:
- EP-A1- 1 964 706
- EP-A2- 1 563 985
- EP-A2- 2 290 278
- DE-A1-102008 055 480
- US-A- 3 684 602

## Beschreibung

Die Erfindung betrifft ein Verfahren zur Herstellung eines flexiblen Schlauches, insbesondere eines Klimaschlauches, wobei der Klimaschlauch eine Permeationsbarriere, ein Druckträger-Garn- oder Kunststoffgeflecht und eine Elastomer-Außenlage aufweist.

Klimaschläuche, beispielsweise für die Verwendung in Automobilen, müssen einer Vielzahl von Einflussgrößen standhalten. Besondere Bedeutung kommt dabei einerseits der Druckfestigkeit, andererseits auch einer geringen Permeationsrate zu. Dies muss bei der Herstellung der entsprechenden Schläuche berücksichtigt werden.

Aus der DE 20 2004 018 301 U ist ein flexibler Schlauch bekannt, der in einer elastomeren Wandung einen eingebetteten Druckträger aufweist, der wenigstens ein im wesentlichen faden- oder drahtförmiges Druckträgerelement enthält. Dieser Druckträger wird auf die zuerst extrudierte elastomere Innenschicht aufgestrickt. Nachfolgend wird eine elastomere Außenschicht aufextrudiert.

Eine derartige Lösung ist jedoch herstellseitig dahingehend eingeschränkt, dass das Aufbringen, hier das Aufstricken des Druckträgers als langsamster Prozess die Herstellung des Gesamtschlauches verzögert und so die Fertigungseinrichtungen nicht optimal genutzt werden können.

Der Erfindung lag daher die Aufgabe zugrunde, ein Fertigungsverfahren für die eingangs geschilderten Schläuche zu schaffen, das eine bessere Auslastung von Fertigungseinrichtungen ermöglicht.

Diese Aufgabe wird dadurch gelöst, dass das Fertigungsverfahren mindestens folgende Arbeitsschritte aufweist, nämlich
1) Bereitstellen eines separat gefertigten schlauchförmigen Druckträger-Garn- oder Kunststoffgeflechts,
3) Extrusion mindestens einer schlauchförmigen Permeationsbarriere aus elastomerem Material,
5) Aufziehen des schlauchförmigen Druckträger-Garn- oder Kunststoffgeflechts auf die Permeationsbarriere,
8) Extrusion mindestens einer Elastomer-Lage auf die Permeationsbarriere und
9) Vulkanisation des derart entstandenen Rohlings zu einem fertigen Schlauch.

Das Druckträger-Garn- oder Kunststoffgeflecht ist auf speziell dafür optimierten Maschinen separat herstellbar, so dass Extrusion- und Vulkanisationsvorrichtungen nicht unnötig langsam arbeiten müssen. Damit ergibt sich eine verbesserte Auslastung dieser Anlagen.

In einer Weiterbildung der Erfindung weist das Verfahren mindestens die beiden weiteren Arbeitsschritt aufweist, nämlich
2) Aufschieben des schlauchförmigen Druckträger-Garn- oder Kunststoffgeflechts unter axialer Stauchung auf mindestens einen Hohldorn,
4) wobei die Permeationsbarriere durch den Hohldorn mit dem aufgeschobenen schlauchförmigen

Druckträger-Garn- oder Kunststoffgeflecht hindurchgeführt und dabei das schlauchförmige

Druckträger-Garn- oder Kunststoffgeflecht vom Hohldorn abgezogen wird

Die Arbeitsschritte dieser Weiterbildung sind gemäß der Nummerierung in die Fertigungsabfolge eingegliedert. Auf diese Weise ist das Druckträger-Garn- oder Kunststoffgeflechts platzsparend in einer Fertigungseinrichtungen unterbringbar. Das Abziehen des Druckträger-Garn- oder Kunststoffgeflechts vom Hohldorn kann ohne weiteren Aufwand kontinuierlich erfolgen.

In einer Weiterbildung der Erfindung weist das Verfahren mindestens einen weiteren Arbeitsschritt auf, nämlich
6) wobei das schlauchförmige Druckträger-Garn- oder Kunststoffgeflecht durch den Abziehvorgang von Hohldorn im Durchmesser auf einen vorbestimmten, mit dem Außendurchmesser der Permeationsbarriere korrespondierenden Durchmesser verringert wird Auch dieser Arbeitsschritt ist gemäß der Nummerierung in die Fertigungsabfolge eingegliedert. Durch eine derartige Durchmesserverringerung wird sichergestellt, dass sich das Druckträger-Garn- oder Kunststoffgeflecht faltenfrei auf die Permeationsbarriere aufziehen lässt.

In einer Weiterbildung der Erfindung weist das Verfahren mindestens einen weiteren Arbeitsschritt auf, nämlich
7) Erwärmung des aufgezogenen Druckträger-Garn- oder Kunststoffgeflechts auf eine dem Druckträger-Garn- oder Kunststoffgeflecht spezifische Schrumpftemperatur, wobei das Druckträger-Garn- oder Kunststoffgeflecht auf der Permeationsbarriere fixiert wird Auch dieser Arbeitsschritt ist gemäß der Nummerierung in die Fertigungsabfolge eingegliedert. Sollte die beim Aufziehen des schlauchförmigen Druckträger-Garn- oder Kunststoffgeflechts entstehende Haftung des Druckträger-Garn- oder Kunststoffgeflechts auf der Permeationsbarriere nicht ausreichen, um bei der Extrusion der Außenlage nicht verschoben zu werden, kann auf diese Weise die Haftung des Druckträger-Garn- oder Kunststoffgeflechts auf der Außenlage verbessert werden.

Selbstverständlich können, je nach Bedarf, die Arbeitsschritte auch mehrmals nacheinander ausgeführt werden, beispielsweise zur Herstellung eines mehrlagigen Schlauches.

Das erfindungsgemäße Verfahren kann durchgeführt werden auf einer Vorrichtung aufweisend einen zur Extrusion von elastomeren Schläuchen geeigneten ersten Extruder mit mindestens einem ersten Dorn und eine Vulkanisationseinrichtung sowie folgende weitere Elemente, nämlich
- einen zweiten Dorn, wobei der zweite Dorn als Hohldorn mit einer um den Hohldorn herum angeordneten Aufnahme für schlauchförmig ausgebildete Druckträger-Geflechte ausgebildet ist,
- einen zweiten Extruder mit einer Durchlassöffnung.

Im ersten Extruder ist eine schlauchförmige Permeationsbarriere aus elastomerem Material auf den ersten Dorn extrudierbar. Diese ist durch den zweiten Dorn hindurch führbar, wobei ein Druckträger-Geflecht von der Aufnahme auf die Permeationsbarriere aufziehbar ist. Im zweiten Extruder ist dann eine elastomere Außenlage auf das aufgezogene Druckträger-Geflecht extrudierbar. Der Verbund ist dann in der an sich bekannten Vulkanisationsvorrichtung zu einem fertigen Schlauch vulkanisierbar. Mit einer derartigen Vorrichtung ist ein Klimaschlauch gemäß dem geschilderten Verfahren besonders vorteilhaft herstellbar.

Die Vorrichtung weist weiterhin eine Wärmestation auf, die zwischen dem zweiten Dorn und dem zweiten Extruder angeordnet ist.

Mit einer derartigen Wärmestation lässt sich das Druckträger-Geflecht nach dem Aufziehen gut an die Permeationsbarriere anlegen, was die nachfolgende Extrusion der Außenlage im zweiten Extruder vereinfacht.

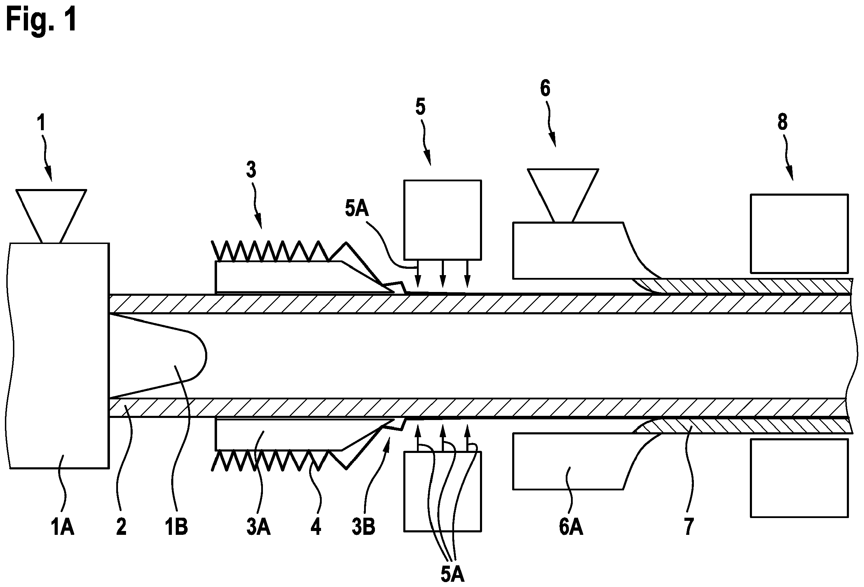

Anhand der Zeichnung wird nachstehend ein Beispiel der Erfindung näher erläutert. Die Fig. 1 zeigt eine prinzipielle Vorrichtung, anhand derer das Fertigungsverfahren erläutert werden kann.

An einer ersten Fertigungsstation 1, hier ein Extruder 1A mit einem Innendurchmesser 1B, wird eine schlauchförmige Permeationsbarriere 2 extrudiert.

An einer weiteren Fertigungsstation 3, hier einem Hohldorn 3A ist ein Druckträger-Garn- oder Kunststoffgeflecht 4 auf den Hohldorn 3A aufgeschoben, wobei das Druckträger-Garn- oder Kunststoffgeflecht 4 ebenfalls schlauchförmig ausgebildet ist und axial gestaucht auf dem Hohldorn 3A angeordnet ist. An einem ersten Ende 3B des Hohldorns 3A wird das Druckträger-Garn- oder Kunststoffgeflecht 4 auf die durch den Hohldorn 3A geführte Permeationsbarriere 2 aufgezogen.

An einer weiteren Fertigungsstation 5 wird das auf die Permeationsbarriere 2 aufgezogene Druckträger-Garn- oder Kunststoffgeflecht 4 mittels Wärmestrahlen, hier symbolisch durch Pfeile 5A dargestellt, erwärmt, wobei es sich radial an die Permeationsbarriere 2 anlegt.

In einer weiteren Fertigungsstation 6, hier ein weiterer Extruder 6A, wird eine Elastomer-Außcnlagc 7 auf den Verbund aus Permeationsbarriere 2 und Druckträger-Garn- oder Kunststoffgeflecht 4 aufextrudiert.

Der so entstandene Schlauchrohling wird in einer weiteren Arbeitsstation 8 zum fertigen Schlauch aus vulkanisiert oder auf einer Trommel aufgewickelt, um im gesamten Bündel ausvulkanisiert zu werden.

### Bezugszeichenliste

### (Teil der Beschreibung)

- 1: Erste Fertigungsstation
- 1A: Extruder
- 1B: Innendorn des Extruders 1A
- 2: Permeationsbarriere
- 3: weitere Fertigungsstation
- 3A: Hohldorn
- 3B: Erstes Ende des Hohldorns 3A
- 4: Druckträger-Garn- oder Kunststoffgeflecht
- 5: weitere Fertigungsstation
- 5A: Wärmestrahlen
- 6: weitere Fertigungsstation
- 6A: Extruder
- 7: Elastomer-Außenlage
- 8: weitere Arbeitsstation, Vulkanisation

## Patentansprüche

1. Verfahren zur Herstellung eines flexiblen Schlauches, insbesondere eines Klimaschlauches, wobei der Klimaschlauch eine Permeationsbarriere (2), ein Druckträger-Garn- oder Kunststoffgeflecht (4) und eine Elastomer-Außenlage (7) aufweist, **dadurch gekennzeichnet, dass** das Fertigungsverfahren mindestens folgende Arbeitsschritte aufweist, nämlich
1) Bereitstellen eines separat gefertigten schlauchförmigen Druckträger-Garn- oder Kunststoffgeflechts (4),
3) Extrusion einer schlauchförmigen Permeationsbarriere (2) aus elastomerem Material,
5) Aufziehen des schlauchförmigen Druckträger-Garn- oder Kunststoffgeflechts (4) auf die Permeationsbarriere (2),
8) Extrusion einer Elastomer-Außenlage (7) auf die Permeationsbarriere (2) und
9) Vulkanisation des derart entstandenen Rohlings zu einem fertigen Schlauch.

2. Verfahren nach Anspruch 1, **dadurch gekennzeichnet, dass** das Verfahren mindestens die beiden weiteren Arbeitsschritt aufweist, nämlich
2) Aufschieben des schlauchförmigen Druckträger-Garn- oder Kunststoffgeflechts (4) unter axialer Stauchung auf einen Hohldorn (3A),
4) wobei die Permeationsbarriere (2) durch den Hohldorn (3A) mit dem auf den Hohldorn (3A) aufgeschobenen schlauchförmigen Druckträger-Garn- oder Kunststoffgeflecht (4) hindurchgeführt und dabei das schlauchförmige Druckträger-Garn- oder Kunststoffgeflecht (4) vom Hohldorn (3A) abgezogen wird.

3. Verfahren nach Anspruch 2, **dadurch gekennzeichnet, dass** das Verfahren mindestens den folgenden weiteren Arbeitsschritt aufweist, nämlich
6) wobei das schlauchförmige Druckträger-Garn- oder Kunststoffgeflecht (4) durch den Abziehvorgang von Hohldorn (3A) im Durchmesser auf einen vorbestimmten, mit dem Außendurchmesser der Permeationsbarriere (2) korrespondierenden Durchmesser verringert wird.

## Claims

1. Method for producing a flexible hose, in particular an air-conditioning hose, wherein the air-conditioning hose has a permeation barrier (2), a pressure carrier yarn mesh or plastics mesh (4) and an elastomer outer layer (7), **characterized in that** the manufacturing method has at least the following work steps of
1) providing a separately manufactured tubular pressure carrier yarn mesh or plastics mesh (4),
3) extruding a tubular permeation barrier (2) from elastomer material,
5) pulling the tubular pressure carrier yarn mesh or plastics mesh (4) onto the permeation barrier (2),
8) extruding an elastomer outer layer (7) onto the permeation barrier (2), and
9) vulcanizing the blank thus formed to form a finished hose.

2. Method according to Claim 1, **characterized in that** the method has at least the two further work steps of
2) pushing the tubular pressure carrier yarn mesh or plastics mesh (4) with an axial upsetting action onto a hollow mandrel (3A),
4) wherein the permeation barrier (2) is passed through the hollow mandrel (3A) with the tubular pressure carrier yarn mesh or plastics mesh (4) pushed onto the hollow mandrel (3A), and in the process the tubular pressure carrier yarn mesh or plastics mesh (4) is pulled off the hollow mandrel (3A).

3. Method according to Claim 2, **characterized in that** the method has at least the following further work step,
6) wherein the tubular pressure carrier yarn mesh or plastics mesh (4) is reduced in diameter to a predetermined diameter corresponding to the outside diameter of the permeation barrier (2) as a result of being pulled off the hollow mandrel (3A) .

## Revendications

1. Procédé de production d'un tuyau flexible, en particulier d'un tuyau de climatisation, le tuyau de climatisation comportant une barrière de perméation (2), un entrelacs en matière synthétique ou en fil de support de pression (4) et une couche d'élastomère extérieure (7), **caractérisé en ce que** le procédé de production comporte au moins les étapes de travail suivantes, à savoir
1) fournir un entrelacs en matière synthétique ou en fil de support de pression (4) produit séparément,
3) extruder une barrière de perméation tubulaire (2) en matière élastomère,
5) tirer l'entrelacs en matière synthétique ou en fil de support de pression (4) sur la barrière de perméation (2),
8) extruder une couche d'élastomère extérieure (7) sur la barrière de perméation (2) et
9) vulcaniser l'ébauche résultante pour obtenir un tuyau fini.

2. Procédé selon la revendication 1, **caractérisé en ce que** le procédé comporte au moins les deux autres étapes de travail, à savoir
2) faire coulisser l'entrelacs en matière synthétique ou en fil de support de pression (4) sur un mandrin creux (3A) avec compression axiale,
4) la barrière de perméation (2) étant guidée à travers le mandrin creux (3A) pourvu de l'entrelacs en matière synthétique ou en fil de support de pression (4) en forme de tuyau que l'on a fait coulisser sur le mandrin creux (3A) et l'entrelacs en matière synthétique ou en fil de support de pression (4) en forme de tuyau étant retiré du mandrin creux (3A).

3. Procédé selon la revendication 2, **caractérisé en ce que** le procédé comporte au moins l'étape de travail supplémentaire suivante, à savoir
6) l'entrelacs en matière synthétique ou en fil de support de pression (4) étant réduit en diamètre à un diamètre prédéterminé correspondant au diamètre extérieur de la barrière de perméation (2) par le processus de retrait du mandrin creux (3A).
